Europäisches Patentamt

(19) European Patent Office

Office européen des brevets

(11) Publication number : **0 327 515 B1**

# (12) EUROPEAN PATENT SPECIFICATION

(45) Date of publication of patent specification :
22.01.92 Bulletin 92/04

(51) Int. Cl.⁵ : **F16L 3/12**

(21) Application number : **89830036.3**

(22) Date of filing : **03.02.89**

(54) Variable diameter collar including an expansion plug for anchoring to a wall pipes and the like.

(30) Priority : **03.02.88 IT 1929088**

(43) Date of publication of application :
**09.08.89 Bulletin 89/32**

(45) Publication of the grant of the patent :
**22.01.92 Bulletin 92/04**

(84) Designated Contracting States :
**AT BE DE ES FR GB GR NL**

(56) References cited :
**GB-A- 999 115**
**GB-A- 1 384 922**
**GB-A- 2 074 013**

(73) Proprietor : **GIA S.r.l.**
**Corso Roma, 53**
**I-28069 Trecate (Novara) (IT)**

(72) Inventor : **Guaglio, Antonio**
**Corso Roma, 53**
**I-28069 Trecate (Novara) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 327 515 B1

## Description

The present invention relates to a variable diameter collar provided wich an expansion plug for anchoring pipes and the like to a wall.

As is known, electrical or hydraulic systems frequently include exposed to view pipes which are affixed to one or more walls by means of suitable anchoring collars.

Also known is the fact that conventional commercially available anchoring collars are scarcely flexible from the use standpoint, since they have a cross-section diameter which is strictly related to that of the pipe to be anchored.

This fact, as it should be apparent, compels the user to hold in inventory a plurality of different size anchoring collars. The document GB-A-999115, which is considered to be the closest prior art, discloses an anchoring collar for pipes having the features of the preamble of the claim 1.

Accordingly, the task of the present invention is to overcome the above mentioned drawback by providing such a collar, for anchoring to a wall a pipe and the like, which can be advantageously used for different diameter pipes.

Within the scope of the above task, it is a main object of the present invention to provide such a pipe collar which can be easily and quickly fitted to the diameter of the pipe to be anchored.

Another object of the present invention is to provide such a pipe collar which is provided with an improved expansion plug.

According to one aspect of the present invention, the above mentioned task and objects, as well as yet other objects, which will become more apparent hereinafter, are achieved by a variable diameter collar, for anchoring to a wall pipes and the like, having the features of claim 1.

Further characteristics and advantages of the variable diameter collar according to the present invention will become more apparent from the following detailed description of a preferred embodiment thereof, which is illustrated, by way of an indicative but not limitative example, in the accompanying drawings, where :

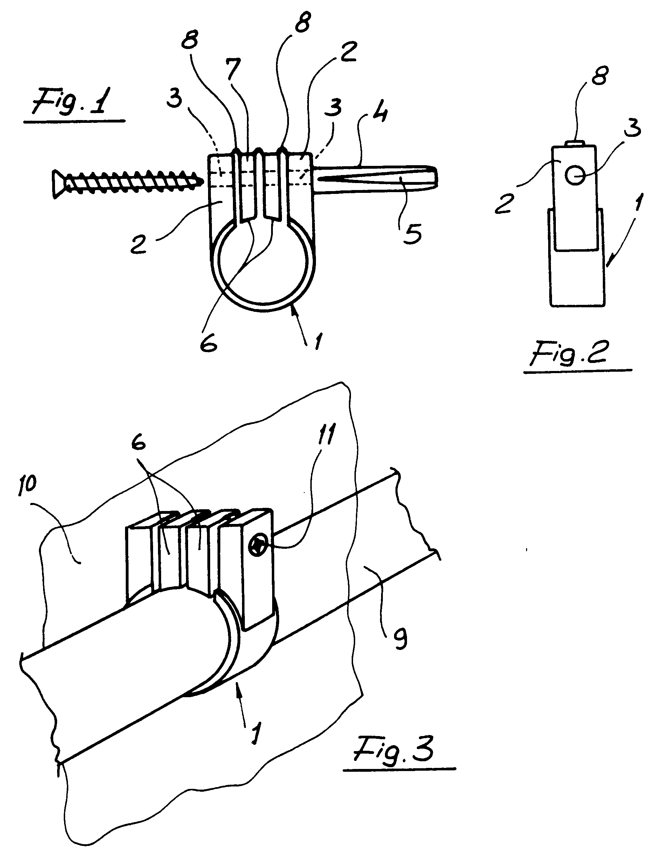

figure 1 is a front view illustrating the collar according to the invention ;

figure 2 is a side view of the collar according to the invention ; and

figure 3 is a schematic view illustrating the subject collar anchoring a pipe to a wall.

With reference to the figures of the accompanying drawings, the variable diameter collar according to the invention, comprises a discontinuous tubular body, indicated overally at the reference number 1, which is provided with suitably enlarged portions 2 at its facing ends or lugs which are both provided with a respective throughgoing hole 3.

To one of said lugs, in particular, there is applied an expansion plug 4 which comprises a longitudinal slot 5 extending along the overall length thereof, as well as a suitably enlarged cylindrical wall having a blunt end.

Between the two lugs, moreover, there are arranged at least two spacer elements 6 which can be individually removed.

More specifically, these spacer elements consist of two small plates 7, of a given thickness, which are also provided with a respective throughgoing hole and coupled to one another and to one of said lugs by means of flexible bridge elements 8.

Thus, depending on the diameter of the pipe 9 to be anchored to the wall, the subject collar can be used as it is or by previously removing one or more of the mentioned plates.

Then the pipe anchoring collar will be affixed to the wall 10, as preliminarly perforated, by means of the expansion plug 4 and a screw 11 which can have any types of thread.

In this connection it should be pointed out that the subject collar can be made of any suitable plastics material and has a curved portion provided with a suitable resilience.

## Claims

1. A variable diameter collar arrangement for anchoring to a wall pipes and the like, comprising a discontinuous tubular body (1) comprising a resilient curved portion and provided at its facing ends with two tangential lugs (2), one of said lugs (2) being provided with a throughgoing hole (3) and the other also including a throughgoing hole (3), perpendicularly thereform extends an expansion plug (4), characterized in that between said two lugs there being moreover arranged at least two individually removable spacer elements (6) which consist of small plates (7) each including a respective throughgoing hole to be aligned with the holes of said lugs, and are coupled to one another and to one of said lugs (2) by means of flexible bridge members (8).

2. A variable diameter collar according to claim 1, characterized in that said expansion plug (4) is povided which a longitudinal slot (5) extending for the overall length thereof.

## Patentansprüche

1. Schellenförmige Vorrichtung mit verstellbarem Durchmesser zum Befestigen von Rohren oder dergleichen an einer Wand, mit einem unstetigem rohrförmigen Körper (1), der eine kerbzähige gekrümmte Portion weist auf und an seinen Stirnenden mit zwei Tangentialvorsprunge (2) vorgesehen ist, wobei eine diesen Vorsprunge (2) ein Durchgangsloch (3) weist auf und auch die andere mit einem Durchgangsloch (3) vorgesehen ist, senkrecht von dem einen Spreizdübel (4) erstreckt sich, dadurch gekennzeichnet, dass zwischen den obengenannten zwei Vorsprunge zwei andere individuell abnehmbare Distanzstücke (6) angeordnet sind, die aus Plättchen (7) bestehen, wobei jedes Plättchen mit einem mit den Löchern der obengenannten Vorsprungen entsprechenden anzureihenden Durchgangsloch vorgesehen ist, und die mittels flexibeln Brückenelementen mit einer der obengenannten Vorsprunge (2) und aneinander gekoppelt sind.

2. Schelle mit verstellbarem Durchmesser nach Anspruch 1, dadurch gekennzeichnet, dass der obengenannte Spreizdübel (4) mit einem über seine ganze Länge sich erstreckenden Längsspalt vorgesehen ist.


## Revendications

1. Disposition en forme de collier à diamètre variable pour l'accrochage de tubes ou d'objet similaires à une paroi, comportant un corps (1) tubulaire discontinu comprenant une portion courbée résiliente et muni sur ses extrémités de face de deux saillies tangentielles (2), l'une desdites saillies (2) étant munie d'un trou passant (3) et l'autre comprenant elle-aussi un trou passant (3), perpendiculairement desquelles une cheville d'expansion (4) s'étend, caractérisée en ce qu'entre lesdites deux saillies il y a arrangé en outre deux éléments (6) d'écartement au moins, qui peuvent être enlevés individuellement et consistant de plaquettes (7) comprenant chacune un trou passant respectif à être aligné avec lesdits trous desdites saillies, et étant accouplés l'un l'autre et avec l'une desdites saillies (2) au moyen d'éléments (8) flexibles à pont.

2. Collier à diamètre variable selon la revendication 1, caractérisé en ce que ladite cheville d'expansion (4) est munie d'une fente longitudinale (5) s'étendant le long de toute sa longueur.

*Fig.1*

*Fig.2*

*Fig.3*